# EUROPEAN PATENT APPLICATION

(11) **EP 4 814 274 A1**
(43) Date of publication of application: **30.09.2026**
(21) Application number: 26164942.0
(22) Date of filing: 16.03.2026
(51) Int. Cl.: F02B 63/04, F02B 77/13, H02J 7/14

(54) **HYBRID POWER GENERATION SYSTEM**

(30) Priority: 25.03.2025 IT 202500006105
(71) Applicant: NED SOCIETA' PER AZIONI, 20123 Milano (IT)
(72) Inventor: GIANCANO, Piero, 74022 FRAGAGNANO (TA) (IT)
(74) Representative: Cutropia, Gianluigi

(57) **Abstract**

Power generation system (100) comprising a generator set (1) comprising an endothermic engine (M) and an alternator (A), at least one renewable energy source (2), a storage system (3), an inverter system (4) electrically connected to the alternator (A), to the renewable energy source (2) and to the storage system (3), a casing (C) that defines a compartment (V) containing the generator set (1), the storage system (3) and the inverter system (4); said casing (C) being soundproofed by means of sound-absorbing panels (6); said casing (C) comprises a supporting frame (5) that supports said sound-absorbing panels (6); said supporting frame (5) comprises uprights (54), lower crossbars (51), and upper crossbars (53) in the form of tubular sections filled with sound-absorbing material.

## Description

The present invention relates to a hybrid power generation system comprising a generator set, a storage system, and an inverter system contained inside a compact casing to reduce noise.

A traditional generator set comprises an internal combustion engine coupled to an alternator for the production of electrical power that is sent to a utility. These systems are widely used and increasingly popular for applications in emergency situations, on construction sites, at temporary events, and in areas not served by the electrical grid to meet the most diverse needs.

However, there are circumstances in which the levels of environmental or acoustic emissions are very restrictive. With regard to environmental pollution, the solution adopted is to install an "emission-compliant" engine, i.e., an engine with exhaust emissions that comply with the standards of a reference regulation. Obviously, the limits that engines must comply with in order to be introduced in the market are increasingly restrictive and stringent depending on the application periods.

Moreover, with reference to acoustic contamination, only a part of the acoustic contamination can be controlled with the management system of the exhaust gases, and the remaining part can be managed by applying constructive measures to create a casing that contains the generator set, as described in EP3783210A1 in the name of the same applicant.

In any case, a generator set is defined as a power generation system comprising three basic components:
- engine apparatus,
- generator apparatus,
- panels for power control, monitoring, and management.

The engine apparatus consists of an internal combustion engine powered by diesel, gasoline, or methane. Regardless of the fuel source, the engine is a source of high noise levels; therefore, in order to reduce the noise emissions, an engine cover is required to protect the engine from external atmospheric phenomena.

However, the traditional generator sets have several limitations:
- high fuel consumption: traditional generators operate continuously, often at reduced loads, resulting in inefficient fuel consumption;
- environmental impact: exhaust emissions and fossil fuel consumption contribute to air pollution and climate change;
- polluting emissions: traditional generator sets release nitrogen oxides (NOx), particulate matter (PM), and carbon dioxide (CO2), which have a negative impact on air quality and public health;
- emissions standards: in recent years, emissions standards for diesel engines have become more stringent with the introduction of the Stage V standard, which imposes strict limits on particulate matter and nitrogen oxide emissions. Engines that comply with such a standard are equipped with advanced exhaust gas after-treatment systems, such as diesel particulate filters (DPF) and selective catalytic reduction (SCR), in order to reduce the environmental impact. All of the above results in higher costs and greater difficulties in the management and installation of said engines;
- noise: the prolonged operation of the engines generates a significant noise level, making these devices unsuitable for residential or sensitive environments;
- limited scalability: traditional generator sets cannot easily adapt to variations in the power demand without causing waste or inefficiency.

In recent years, battery-based systems and inverter systems have become popular, being mainly used in residential and industrial areas to reduce dependence on combustion generators. These systems allow the energy produced from renewable sources (solar and wind energy) or from the electrical grid to be stored in order to be used when needed. However, they also have some limitations:
- dependence on recharging: in the event of a prolonged absence of sun or wind, the batteries may not be sufficient to ensure power continuity;
- high initial costs: the installation of large-capacity batteries can be expensive compared to conventional generators;
- limitations in power output: although battery systems are efficient, they cannot guarantee continuous power for high loads without the support of other energy sources.

Such limitations can be overcome by integrating generators, batteries, and inverters into the same system, combining the advantages of both technologies in order to optimize energy consumption, reduce environmental impact, and ensure greater reliability.

US2024/291313A1 describes a hybrid generator covered with thermal insulation panels.

US2014/277791A1 describes a hybrid generator made with panels that can be coated with sound-absorbing material.

US2021/075252A1 describes a portable hybrid generator having an external housing that may comprise multiple layers, so that insulating material can be positioned between the layers.

The purpose of the present invention is to eliminate the drawbacks of the prior art by providing a hybrid power generation system that is capable of reducing the acoustic and polluting emissions of the generator set.

Another purpose is to provide such a hybrid power generation system that is efficient, reliable, and versatile.

These purposes are achieved in accordance with the invention with the characteristics of the attached independent claim 1.

Advantageous embodiments of the invention appear from the dependent claims.

The object of the present invention is a hybrid power generation system comprising: an engine, an alternator, a storage system, an inverter system, a power generator from renewable sources, and a soundproofing system with acoustic insulation panels that allow to achieve a significant reduction of the noise level. The hybrid power generation system according to the invention uses renewable energy sources, such as solar or wind power. Such a hybrid power generation system is designed to provide a reliable and optimized power supply, reducing fuel consumption and improving energy efficiency compared to the traditional generator sets that are currently available on the market, while maintaining a low acoustic emission.

Further features of the invention will become clearer from the following detailed description that refers to a purely illustrative and therefore non-limiting embodiment, which is illustrated in the accompanying drawings, wherein:
Fig. 1 is a block diagram that schematically illustrates the operation of the hybrid power generation system according to the invention;
Fig. 2 is a perspective rear view of the hybrid power generation system seen from the right side;
Fig. 3 is a rear view of the hybrid power generation system;
Fig. 4 is a view of the hybrid power generation system seen from the right side;
Fig. 5 is a perspective front view of the hybrid system according to the invention seen from the left side;
Fig. 6 is a front view of the hybrid power generation system;
Fig. 7 is a view of the hybrid power generation system seen from the left side;
Fig. 8 is a perspective front view of the hybrid system seen from the right side, wherein the right sound-absorbing panels and the photovoltaic panels arranged superiorly have been removed to show the storage system and the inverters; and
Fig. 9 is a front view of the hybrid power generation system, wherein the front sound-absorbing panels have been removed.

With the aid of the Figures, the hybrid power generation system, which is generally indicated with reference numeral 100, is described.

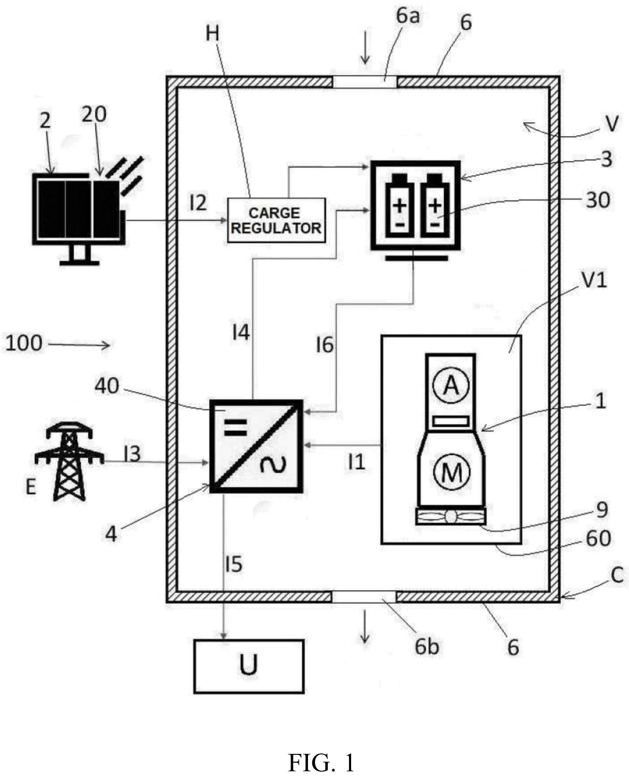

With reference to Fig. 1, the system (100) comprises a generator set (1), at least one renewable energy source (2), a storage system (3), and an inverter system (4). The inverter system (4) comprises a plurality of inverters (40). A battery charging system is integrated in the inverter system (4).

The generator set (1) comprises an internal combustion engine (M), such as a diesel engine, and an alternator (A) that converts the mechanical energy of the engine into electrical energy. Therefore, the generator set (1) outputs a low-voltage, single-phase or three-phase alternating current (I1), with output voltages generally of 230 Volts or 400 Volts.

The renewable energy source (2) advantageously comprises at least one photovoltaic string (20), but may also comprise a wind turbine. If the renewable source consists of one or more photovoltaic strings (20), said renewable source outputs a direct current (12) regulated by a charge regulator (H) connected to the photovoltaic strings (20) and to the storage system (3).

The storage system (3) comprises a plurality of batteries (30), such as lithium batteries.

The inverters (40) of the inverter system are suitable for converting DC power into AC power and vice versa.

The inverters (40) are electrically connected to the alternator (A) of the generator set, to the renewable energy source (2), and to the storage system (3). The inverters (40) are configured to be connected to an electrical utility (U) to supply the electricity produced by the generator set and/or the power produced by the renewable source and/or the power stored by the storage system.

If necessary, the inverters (4) can be configured to be electrically connected to an electrical grid (E), if any. In such a case, the power from the electrical grid can be used to charge the storage system (3).

The electrical grid (E) supplies alternating current (13) with a voltage of 220/400 V.

The utility (U) generally requires alternating current (15) with a voltage of 220/400 V equal to the current (13) of the electrical grid (E).

The current (11) produced by the generator set (1), the current (I2) produced by the renewable source, and the current (13) produced by the electrical grid are sent to the inverter system (4) that converts them into a direct current (15) suitable for charging the storage system (3).

A direct current (16) is drawn from the storage system (3) and is sent to the inverter system (4), where it is converted into an alternating current (15) suitable for powering the utility (U).

In this way, by using the current (16) stored in the storage system (3), the operation of the engine (M) of the generator set is reduced, consequently reducing also the acoustic and environmental pollution produced by the engine (M).

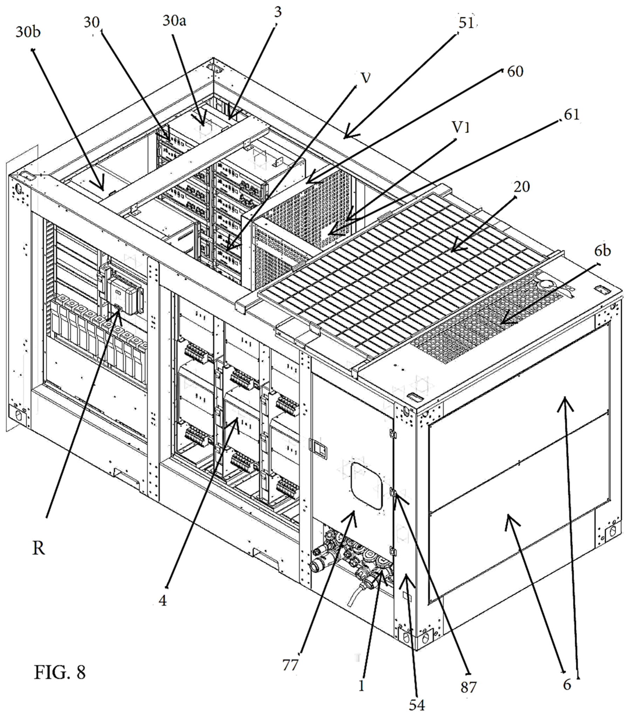

The system (100) comprises a casing (C) that defines a compartment (V) (Fig. 8) containing the generator set (1), the storage system (3), the inverter system (4), and the charge regulator (H). The casing (C) is soundproofed by means of sound-absorbing panels (6).

The casing (C) comprises at least one sound-absorbing panel provided with inlets (6a) to let the air to enter the compartment (V), and at least one sound-absorbing panel provided with outlets (6b) to let the air exit the compartment (V).

The system (100) comprises at least one air extractor (9) configured to allow a flow of forced air into the compartment (V) that enters through the inlets (6a) and exits through the outlets (6b).

Advantageously, the generator set (1) is surrounded by second sound-absorbing panels (60) that define a technical compartment (V1) inside the compartment (V) (Fig. 8). The second sound-absorbing panels (60) have a surface (61) facing the interior of the technical compartment (V1) provided with protrusions to additionally dampen the noise of the engine (M).

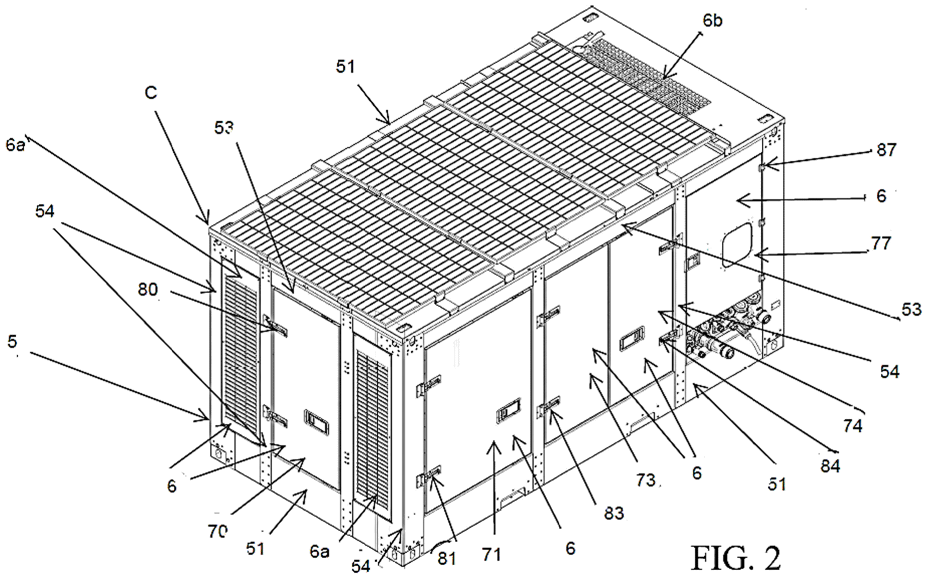

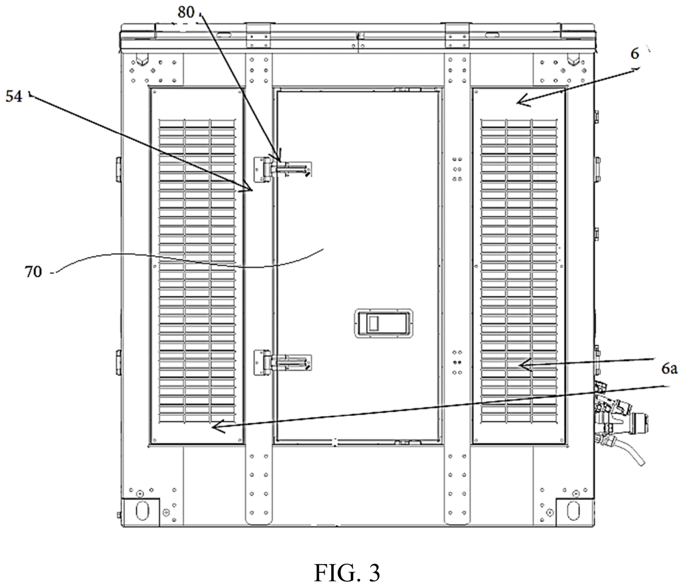

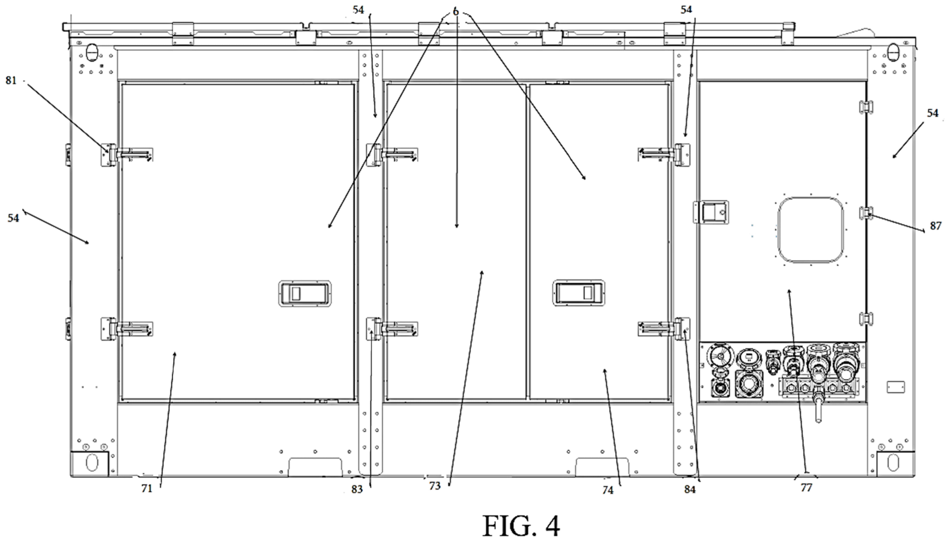

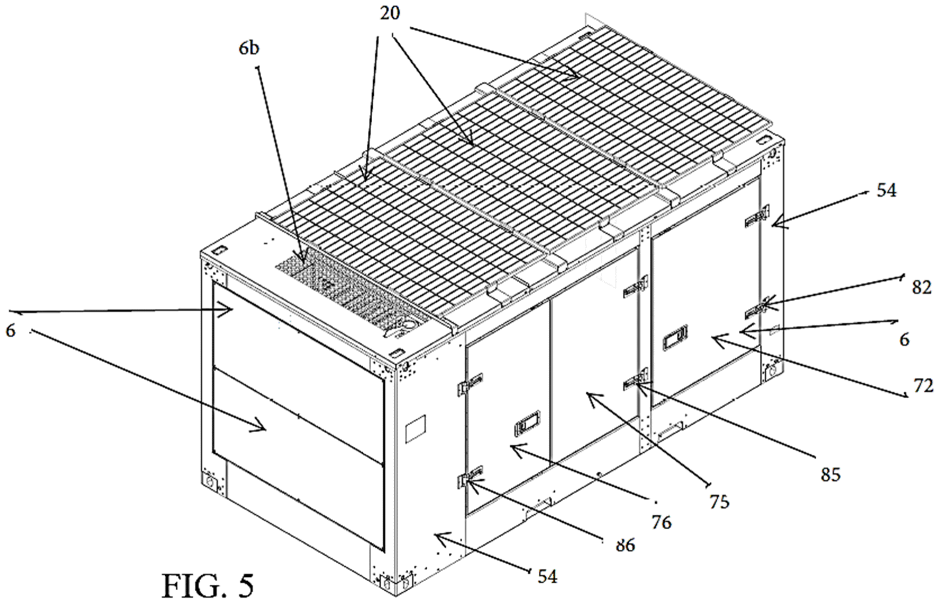

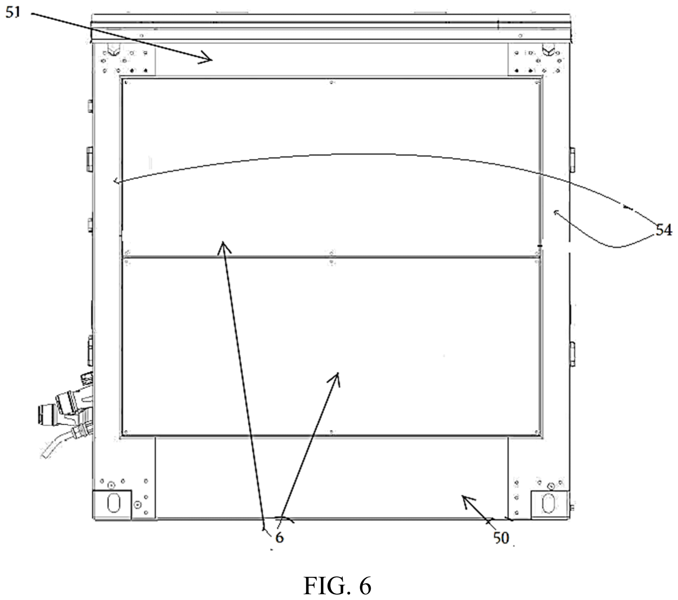

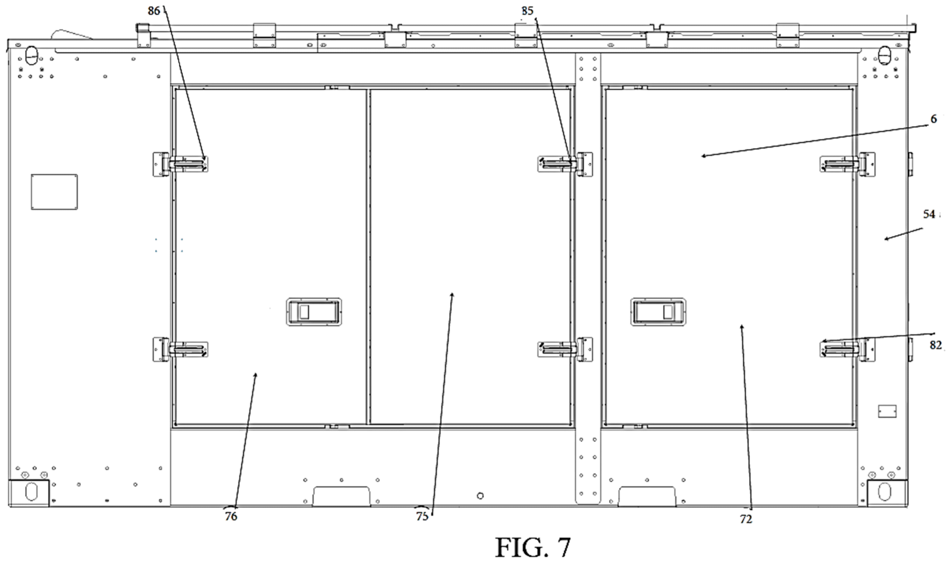

With reference to Figs. 2 to 9, the casing (C) comprises a supporting frame (5) and sound-absorbing panels (6) mounted on the supporting frame (5).

The supporting frame (5) is shaped like a parallelepiped grid comprising:
- a rectangular base (50) formed by four lower crossbars (51) arranged transversely and longitudinally,
- a rectangular upper part (52) formed by four upper crossbars (53) arranged transversely and longitudinally, and
- uprights (54) connecting the lower crossbars (51) of the base (50) to the upper crossbars (53) of the upper part of the frame.

The lower crossbars (51), the upper crossbars (53), and the uprights (54) of the frame are shaped like profiles. Advantageously, the profiles of the supporting frame are shaped like tubular profiles made of metal and filled with sound-absorbing material.

Each sound-absorbing panel (6) consists of a laminate comprising sound-absorbing material, such as foam material, i.e. polyurethane foam, arranged between two sheets of rigid material, such as hard plastic or sheet metal.

The casing (C) comprises one or more lower sound-absorbing panels mounted in the base (50). The generator set (1), the storage system (3), and the inverter system (4) are arranged on the lower sound-absorbing panels in such a way to acoustically isolate the generator set (1) from the ground whereon the casing (C) is positioned.

By way of example, the casing (C) comprises:
- two sound-absorbing panels with inlets (6a) mounted in a rear part of the frame; and
- one sound-absorbing panel with outlets (6b) mounted in the upper part (52) of the frame at a front end of the frame.

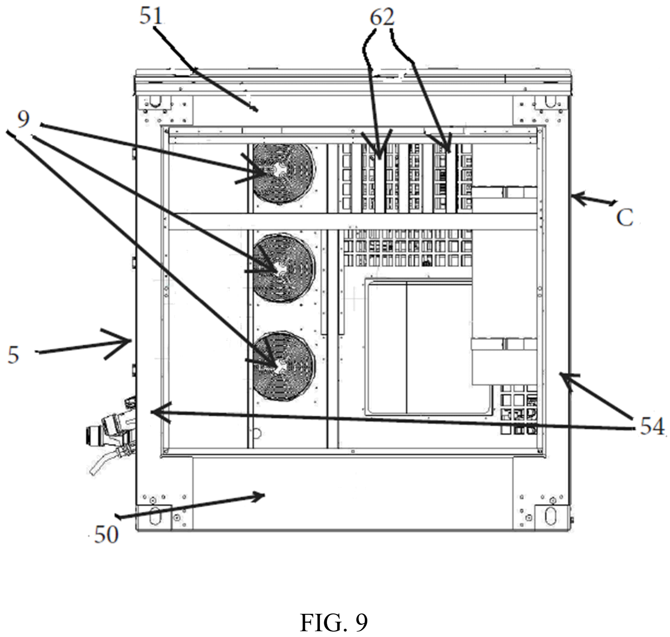

A plurality of sound-absorbing partitions (62) (Fig. 9) are mounted inside the compartment (V) behind the outlets (6b), being arranged in parallel position and spaced apart from each other so as to leave gaps for the air to pass through. The sound-absorbing partitions (62) contribute to the suppression of the noise generated by the generator set (1) that would otherwise escape through the outlets (6b).

The batteries (30) of the storage system are mounted in the compartment (V) behind the inlets (6a), so that the batteries of the storage system dampen the noise generated by the generator set by preventing it from escaping through the inlets (6a) and at the same time are cooled by the air flow entering through the inlets (6a).

By way of example, with reference to Fig. 8, the generator set (1) is located in a front part of the compartment (V); the storage system (3) is located in a rear part of the compartment (V) and the inverter system (4) is located on a right side of the compartment (V) between the generator set (1) and the storage system (3).

The storage system (3) comprises two racks (30a, 30b) with batteries (30) arranged respectively in a rear left part and in a rear right part of the compartment (V).

The renewable energy source (2) comprises photovoltaic strings (20) mounted on the upper part (52) of the frame. The upper part of the frame comprises sound-absorbing panels.

The casing (C) comprises:
- at least one first door (70, 71, 72) for inspecting the batteries (30) of the storage system,
- at least one second door (73, 74) for inspecting the inverters (40), and
- at least one third door (75, 76) for inspecting the generator set (1).

Said at least one first, second, and third door comprise respective sound-absorbing panels (6) hinged to uprights (54) of the supporting frame.

Said at least one first door for inspecting the batteries comprises:
- a rear door (70) hinged to an upright (54) of the frame by means of hinges (80);
- a right lateral door (71) hinged to an upright (54) of the frame by means of hinges (81); and
- a left lateral door (72) hinged to an upright (54) of the frame by means of hinges (82).

The rear door (70) is located in central position between the sound-absorbing panels with inlets (6a).

The right lateral door (71) and the left lateral door (72) are arranged at the rear on a right side and on a left side of the casing (C).

The rear door (70), the right lateral door (71), and the left lateral door (72) comprise sound-absorbing panels (6).

Said at least one second door for inspecting the inverter system (4) comprises two right central lateral doors (73, 74) arranged centrally on the right side of the casing. Each right central lateral door (73, 74) is hinged to a respective upright (54) of the frame by means of respective hinges (83, 84). The right central lateral doors (73, 74) comprise sound-absorbing panels (6).

Said at least one third door for inspecting the generator set (1) comprises two left lateral doors (75, 76) arranged on the left side of the casing. Each left lateral door (75, 76) is hinged to an upright (54) of the frame by means of respective hinges (83, 84). The left lateral doors (75, 76) comprise sound-absorbing panels (6).

The system (100) comprises an electrical panel located in the compartment (V) of the casing (C). In order to inspect the electrical panel, the casing (C) comprises a right lateral door (77) located on the right side of the casing and hinged to an upright (54) of the frame by means of hinges (87). The right lateral door (87) comprises a sound-absorbing panel (6).

With reference to Fig. 9, three air extractors (9) are shown.

The applicant has designed the system (100) so that the compartment (V) defined by the casing (C) soundproofed with the sound-absorbing panels (6) not only accommodates the generator set (1), but also the storage system (3) and the inverter system (4). For such a purpose, doors (70, 71, 72, 73, 74, 75, 76) made with sound-absorbing panels (6) are provided to give access not only to the generator set (1), but also to the storage system (3) and to the inverter system (4), both from the outside of the compartment (V) and from the inside of the compartment (V).

In the attached figures, the racks (30a, 30b) of the batteries of the storage system are accessible from the inside through the rear door (70), whereas the protection fuses of the batteries of the storage system are accessible through the right and left lateral doors (71, 72) located in symmetrical position on the right and left sides of the casing.

Alternatively, the configuration may be easily reversed, with the batteries being accessible from the lateral doors (71, 72) on the left and right sides of the casing and the protection fuses being accessible from the rear door (70).

Air is drawn in through the inlets (6a) on the rear side. The external air comes into contact with the battery racks (30a, 30b), is conveyed into the compartment (V) towards the engine (M) of the generator set and is expelled from the outlets (6b) by means of a forced ventilation of the air extractors (9). This ensures a proper heat dissipation and optimal operating temperatures to guarantee the functioning of the electronic parts of the system (100). Fig. 9 shows three air extractors (9) located at the front end of the compartment (V) in front of the generator set (1).

Depending on the technical and design requirements, the panels with air inlets and outlets may be arranged on any side of the casing, and the battery racks and the inverters may be arranged in any position inside the compartment of the casing.

The system (100) offers a high degree of versatility and is suitable for being adapted to different application requirements, with the following advantages:
- reduced fuel consumption and lower emissions from the engine of the generator set;
- greater energy efficiency due to the combined use of the storage system and of the generator set;
- lower acoustic impact;
- continuous power supply for utilities even in the absence of fuel supply;
- compactness and integration into a single system for easy installation and use.

The system (100) is suitable for being used in various sectors, such as:
- the film industry, given the possibility of working in hybrid mode;
- the industrial sector to ensure emergency power supply;
- residential and commercial facilities to reduce energy costs;
- military and emergency sectors in need of continuous power supply in critical conditions.
- the renewable energy sector, as support for solar or wind power plants.

The present invention represents a significant innovation in the field of generator sets, combining efficiency, reliability, and sustainability. By integrating a storage system, an inverter system, and a generator set into a single compact intelligent system, it is possible to optimize power supply, with significant economic and environmental benefits.

Numerous variations and detailed modifications can be made to the present embodiment of the invention, within the reach of a person skilled in the art, however falling within the scope of the invention as expressed by the appended claims.

## Claims

1. Power generation system (100) comprising:
- a generator set (1) comprising an endothermic engine (M) and an alternator (A) that transforms the mechanical energy of the engine into electrical energy,
- at least one renewable energy source (2),
- a storage system (3) comprising batteries (30) suitable for storing electrical energy,
- an inverter system (4) comprising a plurality of inverters (40) electrically connected to the alternator (A) of the generator set, to the renewable energy source (2) and to the storage system (3); said inverter system (4) being configured to be electrically connected to a utility (U) to electrically power the utility (U), and
- a casing (C) that defines a compartment (V) containing the generator set (1), the storage system (3) and the inverter system (4); said casing (C) being soundproofed by means of sound-absorbing panels (6);
wherein said casing (C) comprises a supporting frame (5) that supports said sound-absorbing panels (6); said supporting frame (5) comprising uprights (54), lower crossbars (51), and upper crossbars (53); and
wherein the lower crossbars (51), the upper crossbars (53) and the uprights (54) of the supporting frame consist of tubular sections filled with sound-absorbing material.

2. The system (100) according to claim 1, wherein said casing (C) comprises at least one sound-absorbing panel (6) provided with inlets (6a) to introduce the air into the compartment (V) and at least one sound-absorbing panel (6) provided with outlets (6b) to let the air out of the compartment (V); and the system (100) comprises at least one air extractor (9) configured to allow a forced air flow into the compartment (V) that enters from the inlets (6a) and exits from the outlets (6b).

3. The system (100) according to claim 1 or 2, wherein said supporting frame (5) is shaped like a parallelepiped grid comprising:
- a rectangular base (50) obtained by means of four lower crossbars (51) arranged transversally and longitudinally,
- a rectangular upper part (52) obtained by means of four upper crossbars (53) arranged transversally and longitudinally, and
- uprights (54) connecting the lower crossbars (51) of the base (50) to the upper crossbars (53) of the upper part of the supporting frame.

4. The system (100) according to any of the preceding claims, wherein each sound-absorbing panel (6) consists of a laminate comprising sound-absorbing material arranged between two sheets of rigid material.

5. The system (100) according to any of claims 2 to 4, comprising a plurality of sound-absorbing partitions (62) mounted in said compartment (V) behind the outlets (6b) and arranged in parallel position and spaced apart from each other so as to leave hollow spaces for the passage of air.

6. The system (100) according to any of claims 2 to 5, wherein the batteries (30) of the storage system (3) are mounted in the compartment (V) behind the inlets (6a).

7. The system (100) according to any of the preceding claims, wherein said renewable energy source (2) comprises at least one photovoltaic string (20) mounted on an upper part (52) of the supporting frame and said system (100) comprises a charge regulator (H) connected to said photovoltaic string and to said storage system (3) and arranged in said compartment (V) defined by said casing (C).

8. The system (100) according to any one of the preceding claims, wherein said casing (C) comprises:
- at least one first door (70, 71, 72) for inspecting said batteries (30) of the storage system,
- at least one second door (73, 74) for inspecting said inverter system (4), and
- at least one third door (75, 76) for inspecting said generator set (1),
wherein said at least one first, second and third door comprise respective sound-absorbing panels (6) hinged to uprights (54) of said supporting frame.

9. The system (100) according to any one of the preceding claims, comprising second sound-absorbing panels (60) that surround the generator set
(1) and define a technical compartment (V1) inside the compartment (V); wherein said second sound-absorbing panels (60) have a surface (61) facing the inside of the technical compartment (V1) provided with protrusions configured to additionally dampen the noise of the engine (M).
